Europäisches Patentamt

European Patent Office

Office européen des brevets

(11) Numéro de publication: **0 153 893**
**A2**

(12) # DEMANDE DE BREVET EUROPEEN

(21) Numéro de dépôt: **85400324.1**

(22) Date de dépôt: **22.02.85**

(51) Int. Cl.⁴: **A 01 C 7/00**
**A 01 G 13/02**

(30) Priorité: **02.03.84 FR 8403252**
**29.03.84 FR 8404889**

(43) Date de publication de la demande:
**04.09.85 Bulletin 85/36**

(84) Etats contractants désignés:
**AT BE CH DE FR GB IT LI LU NL SE**

(71) Demandeur: **Société d'Extrusion et de Transformation**
**12, rue Christophe Colombe**
**F-75008 Paris(FR)**

(72) Inventeur: **Henrio, Germain**
**Leschu**
**F-56300 Saint-Gerand/Pontivy(FR)**

(54) Semoir mécanique rotatif permettant le paillage et l'ensemencement simulatanes du sol.

(57) Machine agricole du type semoir mécanique rotatif permettant la pose sur le sol de bandes de film de matière plastique, l'ensemencement du sol à travers ces bandes caractérisée par un train de roulement déformable autour de quatre axes orthogonaux deux à deux, comportant des socs ouvreurs de sillons (2), des socs étaleurs de terre (10), des roues de tension du film (7) montées sur des colonnes obliques inclinées sur l'arrière (8), des roues tasseuses (13), tous organes montés élastiquement sur le bâti de la machine, des roues semeuses (14) alimentées en graines à leur partie basse, et un ensemble hydromécanique coupe-film relevable intervenant automatiquement en bout de champs.

FIG.1

EP 0 153 893 A2

# SEMOIR MECANIQUE ROTATIF PERMETTANT LE PAILLAGE ET L'ENSEMENCEMENT SIMULTANES DU SOL

L'invention a pour objet une machine agricole du type semoir mécanique rotatif de précision permettant d'effectuer simultanément la pose et la fixation au sol de bandes de films plastiques équidistantes et de réaliser l'ensemencement du sol par des graines de plantes à travers ces bandes de films plastiques.

Il est connu en effet que la culture de certaines plantes telles que la betterave sucrière ou le maïs est favorisée par la mise en place au sol de feuilles de matière plastique telle que le polyéthylène, perforées de place en place au moment de l'implantation des graines et qui, si ces feuilles sont noires, empêchent la croissance des mauvaises herbes, et de toute façon, si elles sont incolores, conservent l'humidité du sol et retiennent la chaleur reçue du soleil pendant la journée.

L'art antérieur fournit plusieurs exemples de machines aptes à réaliser en une seule opération la mise en place de films plastiques sur le sol, et l'ensemencement du sol à travers ces films, notamment dans les brevets français nos. 2 337 492 et 2 399 198 et les brevets américains USP nos. 3.236.199 et 3.468.267.

Ces machines ont été jusqu'ici caractérisées par une complexité, génératrice de fragilité, de sources de pannes et de frais d'entretien et une rigidité qui s'accomode mal de cette fragilité.

L'objet de l'invention est donc de proposer une solution économique, caractérisée par une simplicité de conception, de grande adaptabilité au terrain et à ses inégalités, et partant de grande robustesse, garantissant des frais d'entretien réduits.

La machine selon l'invention est destinée à être remorquée par un tracteur, elle est donc dépourvue de source motrice, ce qui réduit sa complexité.

Elle comporte une pluralité de dévidoirs de film plastique, limitée à deux dans une réalisation pratique préférée de l'invention, une pluralité de distributeurs de graines, une pluralité de plantoirs rotatifs équipés de godets perforateurs de film plastique. Dans la pratique ces plantoirs rotatifs sont limités à quatre pour des raisons de rentabilité.

On comprendra mieux les particularités de la machine en se reportant aux Figures annexées.

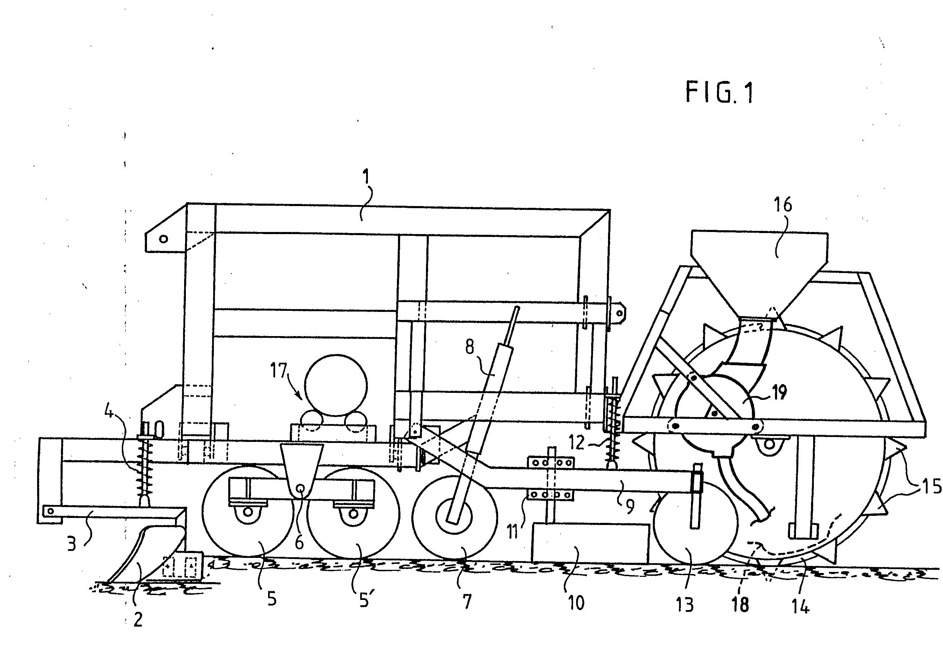

La figure 1 représente une vue d'ensemble de la machine.

La figure 2 représente une plate bande vue en coupe, résultat de l'enterrement du film par des socs convergents selon l'art antérieur.

La figure 3 représente une plate bande vue en coupe, résultat de l'enterrement du film par des socs divergents selon l'invention.

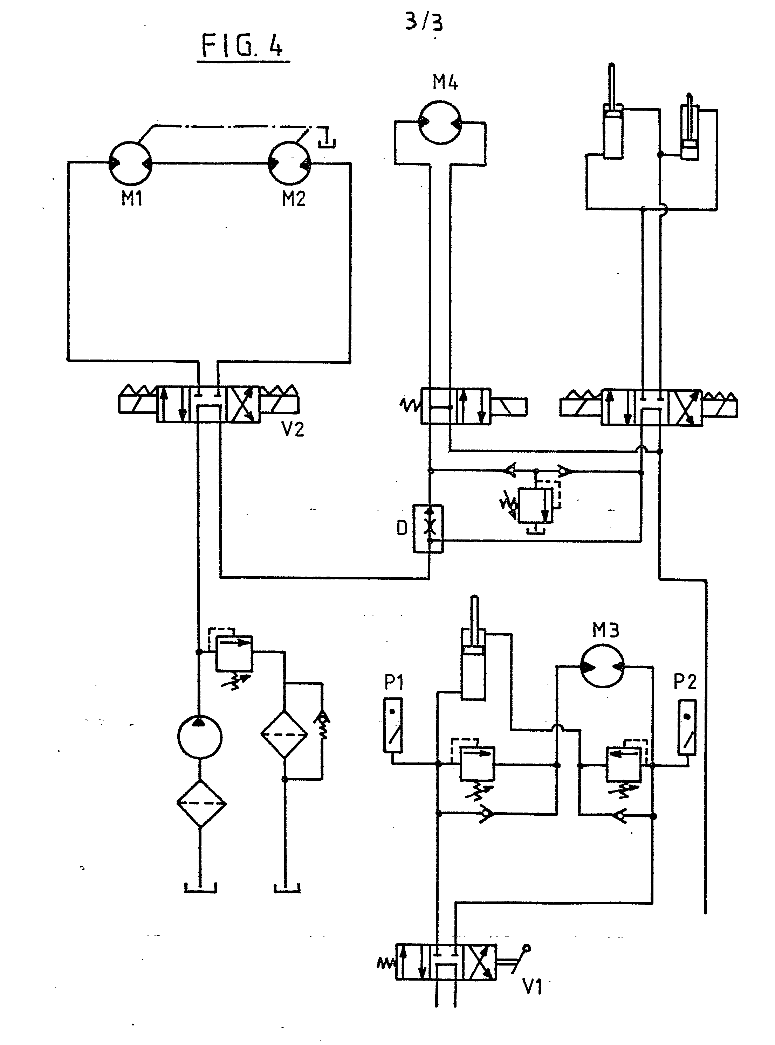

La figure 4 représente le circuit hydraulique du dispositif coupe-film.

La machine s'adapte au sol grâce à un train de roulement particulier constitué de deux paires de cylindres en tandem,(5,5') doté de degrés de liberté en nombre suffisant pour s'adapter à tous les types de terrains, que ce soit les terrains en pente uniforme, ou les accidents localisés de terrain de type synclinal ou anticlinal.

En effet, ce train de roulement, placé dans la partie avant de la machine, possède une mobilité totale autour de quatre axes orthogonaux deux à deux.

Les deux premiers axes (6,6') sont perpendiculaires à l'axe général de la machine ; ce sont les axes médians des paires de cylindres en tandem, (6') est l'homologue de 6, en arrière du plan de figure.

Ils sont confondus en un seul axe (6) si la machine est supposée reposer sur un plan parfait et horizontal (marbre des mécaniciens).

Ils permettent à chaque paire d'effectuer des mouvements d'avant en arrière (mouvement de tangage connu et bien défini en mécanique navale et aéronautique).

Si le terrain n'est pas horizontal, ou si, en plus il comporte des bosses (anticlinaux) ou des creux (synclinaux), deux axes de rotation supplémentaires, situés à un niveau supérieur à celui des deux précédents, ces axes étant parallèles entre eux et à l'axe général de la machine, permettent des mouvements de chaque paire pour son compte propre, de la gauche vers la droite (mouvement dit de roulis en mécanique navale et aéronautique). Les deux premiers axes enveloppent donc des cercles centrés sur les deux derniers axes nommés.

Les dévidoirs de film plastique (17) (dans la pratique au nombre de deux) débitent leur film dans l'intervalle existant entre les deux cylindres (5,5') de chaque tandem (qui ne sont pas au contact l'un de l'autre).

Le premier cylindre sert d'appui au sol et de guide au tandem, tandis que le second sert d'organe presseur du film contre le sol.

Le film plastique en bande descend de telle sorte que ses deux rives sont au dessus de deux sillons ouverts par une paire de socs obliques (2) placés en avant de la machine (une paire de socs ouvreurs par bande de film). Il y a donc dans la pratique quatre socs.

Ces socs sont appliqués sur le sol, chacun par un levier (3) de la machine et maintenus en pression contre le sol malgré les inégalités du terrain par tout organe élastique du type ressort (4), barre de torsion ou accumulateur oléo-pneumatique.

Une réalisation simple préférée de la machine est telle que les socs sont montés chacun sur un bras de levier (3), l'organe de pression élastique étant un ressort hélicoïdal (4) situé à une distance comprise entre les deux tiers et les trois quarts de la longueur du bras de levier mesurée à partir du point d'articulation sur le bâti (1) de la machine.

Le semoir mécanique rotatif selon l'invention est caractérisé en ce que les socs ouvreurs de sillon font avec la direction d'avancement de la machine un angle inverse de celui qu'on observe sur les machines de l'art antérieur, c'est-à-dire qu'ils forment deux par deux un angle ouvert vers l'avant de la machine. Nous appellerons ce montage des socs un montage divergent, par opposition au montage des socs convergents de l'art antérieur.

Dans la machine selon l'invention, les socs divergents rejettent la terre vers l'intérieur, sur la partie du terrain où va être posé le film, alors que sur les machines de l'art antérieur la terre enlevée par les socs convergents est rejetée vers l'extérieur.

Dans la machine selon l'invention, cette opération est rendue possible par la proximité et l'importance gravifique du premier rouleau de chaque demi-train de roulement qui, immédiatement après les socs ouvreurs, écrase aussitôt la terre enlevée par les socs pour en faire une butte en légère surélévation par rapport au sol, ce qui lui permettra de devenir un lit de semence parfait.

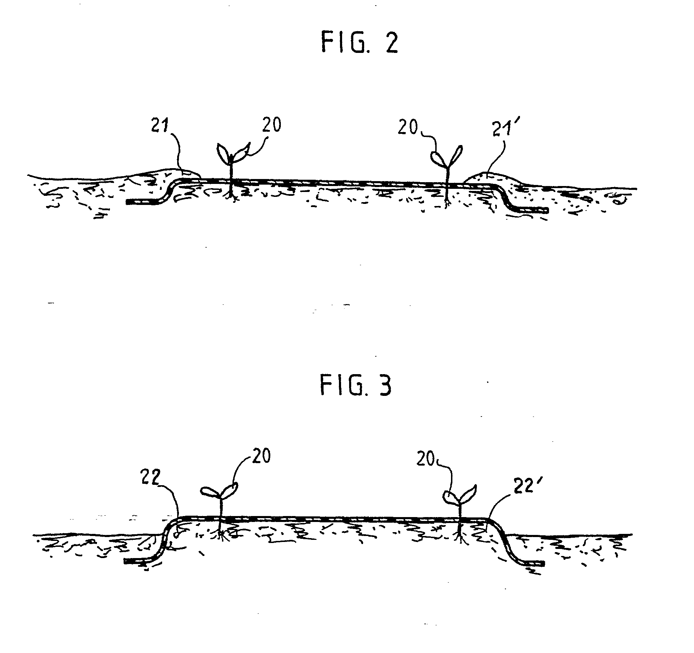

Sur les figures 2 et 3 on peut voir en :

(20) - les plants de croissance

(21) et (21') - la terre en excès rapportée sur le film par les socs montés suivant l'art antérieur

(22) et (22') - la butte nivelée en surélévation par la machine selon l'invention.

La terre destinée à recouvrir les bords du film et à refermer les tranchées est prélevée par les socs étaleurs (10), réglés à la profondeur voulue, dans l'intervalle situé entre les bandes de film, encore appelé entrerang.

Suivant ce mode opératoire, il est possible de ne prélever que la quantité de terre nécessaire à ce recouvrement, alors que dans l'art antérieur, la terre issue de l'ouverture de la tranchée excède en général cette quantité, occasionnant, soit des bourrages entre les socs, en particulier entre les socs internes, soit un surcroît de terre sur le film, diminuant ainsi sa surface offerte à la lumière et l'effet thermique en résultant.

On voit en particulier par la figure 3 que la partie de film apparente est plus importante que sur la figure 2 suivant l'art antérieur. Donc l'effet thermique sera augmenté d'autant et le pourcentage de film non photodégradé en sera diminué.

A la suite des rouleaux presseurs de film sur le sol, on trouve des roues équipées de pneumatiques (7), dont le rôle est de presser les rives des bandes de film plastique dans les sillons ouverts par les socs. Il existe une roue par rive, donc deux roues par bande de film, et dans la réalisation pratique que nous évoquons depuis le début de cette description quatre roues à presser le film au fond des sillons ouverts par les socs, ou, ce qui revient au même, quatre roues destinées à tendre le film sur la bande de terre comprise entre les deux groupes de sillons en question (entre le premier et le second sillons, et entre le troisième et le quatrième sillons).

Ces roues sont indépendantes les unes des autres et montées des colonnes obliques (8), inclinées sur l'arrière de la machine d'un angle compris entre 15 et 30° par rapport à la verticale.

Ces colonnes sont en deux parties, comportant un piston et un fourreau, le piston comprimant un ressort hélicoïdal guidé par un prolongement de ce piston de plus petit diamètre que lui et traversant le fond du fourreau.

Tout autre moyen élastique équivalent tel qu'accumulateur oléopneumatique ou à garniture à sec peut remplacer le ressort hélicoïdal.

A la suite des roues destinées à tendre le film au fond des sillons, on trouve une pluralité de couples composites indépendants constitués d'un soc étaleur (10) et d'une roue tasseuse (13).

Ces couples sont pour les deux extrêmes (premier et quatrième) montés, comme les socs ouvreurs, sur des bras de levier (9) articulés sur le bâti, les ressorts de contre pression (12) étant montés à une distance comprise entre les deux tiers et les trois quarts de la longueur des bras de levier mesurée à partir des points d'articulation sur le bâti.

Pour des raisons de compacité les deux couples internes (second et troisième) sont montés sur un parallélogramme déformable dans le sens vertical, le ressort de contre pression étant disposé suivant la diagonale en extension du parallélogramme.

Les socs (10) sont situés environ à la moitié de la longueur du bras de levier (9). Ils sont montés de façon à être réglables en hauteur par rapport aux roues tasseuses grâce au pontet (11), ce qui fait que celles-ci déterminent pratiquement la hauteur de terre recouvrant les rives des bandes de film plastique et servant à la fixation de celles-ci au sol.

A la suite des socs étaleurs et des roues tasseuses, on trouve une pluralité (quatre dans le cas de la machine que nous avons décrite jusqu'ici) de roues semeuses (14).

Celles-ci sont articulées de façon connue sur le bâti et munie de façon connue d'une pluralité de godets semoirs pointus (15).

La machine selon l'invention est telle que ces godets, ouverts à leur extrémité opposée à la pointe du semoir, sont en permanence aptes à recevoir des graines descendant par une combinaison de l'action de la gravité et d'un soufflage d'air, d'une trémie (16) située au dessus de la roue semeuse.

Sous l'action d'une première came (18), connue par l'art antérieur, le godet semoir s'ouvre lorsqu'il se trouve au point le plus bas. Sous l'action d'une seconde came (d'une façon déjà connue par l'art antérieur) l'air soufflé par une turbine dans un tube situé au dessus de ce godet dans la position indiquée, une ou plusieurs graines sont projetées dans le trou creusé en terre à travers le film plastique.

La particularité de la machine selon l'invention, qu'on ne retrouve dans aucune des machines de l'art antérieur, est que la distribution des graines se fait dans une position basse des godets semoirs (15), et plus précisément dans la position du godet immédiatement adjacente au point le plus bas de la circonférence, évitant d'avoir à fermer le godet pendant le mouvement de la roue, pour éviter la projection des graines à l'extérieur. Cette disposition permet une grande simplicité dans la construction de la machine, et la fiabilité de la roue semeuse est totale.

Les graines issues de la trémie (16) passent dans un distributeur à disque tournant (19) placé à l'intérieur de la roue semeuse, en une position centrale mais non axiale.

Enfin en dernière position de la machine, on trouve le dispositif coupe-film. Il est constitué d'une centrale hydraulique et d'un portique portant les outils de découpe, les moteurs hydrauliques actionnant ces outils, les vérins hydrauliques ou mécaniques assurant la descente des outils de coupe dans le sol et leur relevage, la translation transversale de ces outils de coupe, les vérins à action alternative traçant à chaque fin de travail en bout de champs le nouveau repère de travail à l'espacement désiré, les ventouses de transfert de film.

Tout cet ensemble hydromécanique constituant le dispositif coupe-film est nouveau et revendiqué comme partie intégrante de l'invention. Il permet entre autres au conducteur de la machine de couper le film en bout de champs, de le transporter en position convenable pour commencer une nouvelle piste de travail sans avoir à descendre de machine pour accrocher les extrémités libres du film à des organes de fixation prévus sur la machine comme c'est le cas des machines de l'art antérieur.

En reprenant par le détail de la description du dispositif coupe-film, nous dirons qu'il comporte deux disques coupants non développables et munis chacun de son moteur hydraulique d'entraînement. (M1, M2) Les moteurs hydrauliques sont montés en prise directe sur les disques, dans la concavité de ceux-ci.

La forme des disques est telle qu'en coupant le film ils tranchent aussi le sol sur une profondeur réglable et le retournent pour border l'extrémité transversale du film.

Ces disques sont suspendus à la partie basse d'un portique transversal qui est muni sur sa traverse d'une crémaillère rectiligne solidaire des disques coupants et capable de coulisser sous l'action d'un pignon entraîné par moteur hydraulique indépendant – (M3).

Les deux montants verticaux du portique contiennent des tiges filetées qui, par action de fourrures également filetées d'un pas correspondant, et mises en rotation par moteur hydraulique (M4) et renvois d'angle permettent de descendre dans le sol l'ensemble porte disques et de le relever.

Il a été trouvé judicieux et c'est là l'une des caractéristiques de l'invention, de mettre en rotation les disques coupants pendant la phase de descente, avant qu'ils n'entrent en contact avec le sol pour tenir compte de la caractéristique de faible couple au démarrage présentée par les moteurs hydrauliques dont par ailleurs les avantages de facilité d'intégration dans un ensemble mécanique sont si grands. Le cycle de travail des disques coupants peut être décrit comme suit :

1. Les deux disques sont avant contact avec le sol mis en rotation dans le sens trigonométrique.

2. L'ensemble coupant pénètre dans le sol en tournant dans le même sens.

3. La translation intervient sous l'effet du système crémaillère/pignon. Le film est coupé et bordé de terre.

4. Le sens de rotation est inversé pendant le relevage de l'ensemble coupant, et pendant que les ventouses maintiennent le brin libre de film coupé venant du dévidoir.

5. Le tracteur effectue un demi-tour en bout de champs et deux vérins traceurs tracent au sol les repères d'alignement pour les nouvelles bandes de film à déposer.

6. Toujours tournant dans le sens des aiguilles d'une montre, les disques pénétrent dans le sol en même temps que les ventouses déposent le brin libre des nouvelles bandes de film à déposer.

7. Le moteur de translation actionne le système crémaillère/- pignon pour effectuer le bordage du film en début de champs.

8. Quand le mouvement transversal est effectué l'ensemble coupant est relevé par le système tiges filetées/fourrures/M4.

9. La rotation des disques s'arrête et le travail d'ensemencement peut avoir lieu.

La succession de ces opérations s'effectue automatiquement grâce à un programme hydraulique fourni par la centrale mobile avec l'ensemble coupe-film de la machine.

Le conducteur de la machine dispose d'une vanne manuelle V1 qui agit sur un circuit comprenant deux pressostats P1, P2 (liés électriquement à l'électrovanne à double effet V2 ayant sous sa dépendance les moteurs hydrauliques M1, M2), le moteur M3 de déplacement latéral (mouvement de translation) et l'organe de montée/ descente qui est constitué soit de deux vérins hydrauliques à double effet, soit d'un moteur hydraulique M4 actionnant des vérins mécaniques (tiges/fourrures).

Pilotée par les pressostats P1/P2 la pompe hydraulique attaque directement les moteurs de rotation des disques M1/M2.

En fin de course de translation, des contacteurs électriques (un à chaque extrémité) inversent le sens de rotation des disques.

La pompe hydraulique attaque également, mais à travers un diviseur de débit D (étrangleur avec piquage latéral), le moteur M3 actionnant la pompe à vide activant les ventouses et les vérins traceurs de bandes de semoirs.

Ceci afin de faire fonctionner, avec le même circuit hydraulique les organes dans l'ordre voulu.

## REVENDICATIONS

1. Machine agricole à fonctions multiples permettant la pose sur le sol, au fond de sillons, de bandes de matière plastique, le recouvrement des bords de ces bandes par de la terre et l'ensemencement des sillons à travers ces bandes grâce à une pluralité de roues perforatrices et comportant une pluralité de dévidoirs (17) de bande de matière plastique, caractérisée en ce qu'elle est munie à l'avant d'un train de roulement constitué de deux paires de cylindres en tandem (5,5'), ce train de roulement étant mobile autour de quatre axes orthogonaux deux à deux, deux de ces axes enveloppant des cercles centrés sur les deux autres axes.

2. Machine agricole suivant la revendication 1 caractérisée en ce que les bandes de film plastiques déroulées sont introduites dans l'intervalle séparant les cylindres (5,5') de chaque paire tandem, le second cylindre du tandem servant à presser le film contre le sol.

3. Machine agricole selon l'une des revendications 1 et 2 caractérisée en ce qu'elle comporte une pluralité de socs ouvreurs de sillons (2) appliqués sur le sol par tous organes mécaniques ou oléo- pneumatiques tels que ressorts, barres de torsion ou accumulateurs oléo-pneumatiques.

4. Machine agricole selon l'une quelconque des revendications 1 à 3 caractérisée en ce que les socs ouvreurs de sillons (2) sont montés sur des bras de levier individuels (3), articulés en un point du bâti de la machine et qui compriment dans leur course de débattement des ressorts hélicoïdaux (4) situés à une distance comprise entre les deux tiers et les trois quarts de la longueur du bras de levier (3) à partir du point d'articulation.

5. Machine agricole selon l'une quelconque des revendications 1 à 4 caractérisée en ce que les socs ouvreurs de sillons placés en avant du train de roulement 5,5' sont montés deux par deux en formant un angle ouvert vers l'avant de la machine, de façon à ramener la terre vers la zone centrale de la bande de matière plastique appliquée au sol.

6. Machine agricole selon l'une des revendications 1 à 5 caractérisée en ce qu'elle est munie d'une pluralité de roues indépendantes (7) destinées à tendre le film et montées sur des colonnes d'absorption des chocs (8) montées obliquement dans un plan vertical parallèle à l'axe de déplacement de la machine avec une inclinaison vers l'arrière de cette machine d'un angle compris entre 15 et 30° sur la verticale.

7. Machine agricole selon l'une des revendications 1 à 6 caractérisée en ce que les colonnes d'absorption des chocs (8) sont munies de ressorts hélicoïdaux guidés sur un axe ou d'un accumulateur oléo-pneumatique.

8. Machine agricole selon les revendications 1 à 7 caractérisée en ce qu'elle est munie d'une pluralité de roues tasseuses (13) montées chacune sur un bras de levier indépendant (9) qui comprime un ressort (12) situé à une distance comprise entre les deux tiers et les trois quarts de la longueur du bras de levier, mesurée depuis le point d'articulation et comportant également un soc étaleur de la terre (10), monté de façon réglable en hauteur et situé à la moitié de la longueur du bras de levier, les hauteurs relatives d'une roue tasseuse et d'un soc étaleur permettant de régler la hauteur de la terre de recouvrement des rives des bandes de film plastique.

9. Variante du dispositif selon la revendication 8 caractérisée en ce que les roues tasseuses (13) sont montées sur la partie mobile d'un parallélogramme déformable dans le sens vertical, le ressort de contre-pression étant disposé suivant la diagonale en extension du parallélogramme.

10. Machine agricole du type semoir mécanique rotatif comportant une pluralité de godets pointus (15) caractérisée en ce que ces godets sont ouverts à leur extrémité opposée à la pointe et qu'il reçoivent les graines à semer par cette extrémité ouverte lorsque les godets atteignent la position adjacente au point le plus bas de la circonférence décrite par la roue semeuse (14) par rapport à la machine.

11. Machine agricole du type semoir mécanique rotatif caractérisée en ce que les graines issues de la trémie (16) passent dans un distributeur (19) à disque tournant placé à l'intérieur de la roue semeuse, en une position centrale mais non axiale.

12. Machine agricole du type semoir mécanique comportant un dispositif coupe-film caractérisée en ce que celui-ci est actionné hydrauliquement et comporte deux disques coupants rotatifs non développables capables de tourner successivement dans un sens et dans le sens inverse ces mouvements étant commandés pour chaque disque par un couple pressostat/moteur hydraulique et les disques étant mis en rotation avant pénétration dans le sol, la forme de ces disques permettant le recouvrement du bord transversal du film.

13. Machine agricole du type semoir mécanique selon la revendication 10 caractérisée en ce que le dispositif coupe-film est susceptible d'effectuer des mouvements de translation alternés sous l'action d'un ensemble hydro mécanique constitué par un pressostat, un moteur hydraulique, un pignon et une crémaillère.

14. Machine agricole du type semoir mécanique suivant les revendications 10 à 12 caractérisée en ce que le dispositif coupe-film est susceptible d'effectuer des mouvements verticaux de montée et descente sous l'action de vérins hydrauliques ou mécaniques.

15. Machine agricole du type semoir mécanique suivant les revendications 10 à 13 caractérisée en ce que le film tranché lorsque la fin d'un sillon est atteinte est transporté par deux ventouses commandées par une pompe à vide, un moteur hydraulique et un diviseur de débit.

FIG.1

FIG. 2

FIG. 3

0153893

3/3

FIG. 4